(19) Europäisches Patentamt
European Patent Office
Office européen des brevets

(11) Veröffentlichungsnummer: **0 244 551**
**B1**

(12) # EUROPÄISCHE PATENTSCHRIFT

(45) Veröffentlichungstag der Patentschrift: **14.03.90**

(51) Int. Cl.⁴: **C21B 13/00**

(21) Anmeldenummer: **86890130.7**

(22) Anmeldetag: **07.05.86**

(54) **Integriertes Hüttenwerk.**

(43) Veröffentlichungstag der Anmeldung:
**11.11.87 Patentblatt 87/46**

(45) Bekanntmachung des Hinweises auf die Patenterteilung:
**14.03.90 Patentblatt 90/11**

(84) Benannte Vertragsstaaten:
**AT BE CH DE FR GB IT LI LU NL SE**

(56) Entgegenhaltungen:
**EP-A- 0 126 391**
**DE-A- 2 112 369**
**FR-A- 2 174 796**
**FR-A- 2 362 789**
**US-A- 3 653 874**
**US-A- 4 053 301**

**STAHL UND EISEN, Band 95, Nr. 3, 30. Januar 1975, Seiten 91-99, Düsseldorf, DE; H.-G. PÖTTKEN et al.: "Auswirkung der Struktur eines Unternehmens auf seine Energiewirtschaft unter besonderer Berücksichtigung der Energieausnutzung"**

(73) Patentinhaber: **VOEST-ALPINE INDUSTRIEANLAGENBAU GESELLSCHAFT m b.H., Turmstrasse 44, A-4020 Linz(AT)**

(72) Erfinder: **Standler, Gerhard, Dipl.-Ing., Schultestrasse 10, A-4020 Linz(AT)**
Erfinder: **Zeller, Siegfried, Dipl.-Ing., Josef-Scheuweg 4, A-4020 Linz(AT)**
Erfinder: **Milionis, Konstantin, Dipl.-Ing., Idlhofgasse 80, A-8020 Graz(AT)**
Erfinder: **Zeller, Rudolf, Dipl.-Ing. Dr., Donauerweg 1, A-4040 Linz(AT)**

(74) Vertreter: **Wolfram, Gustav, Dipl.-Ing., Schwindgasse 7 P.O. Box 205, A-1041 Wien(AT)**

**EP 0 244 551 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein integriertes Hüttenwerk, umfassend eine Kokerei, eine Hochofenanlage, ein Konverterstahlwerk und eine Anlage zur Direktreduktion von Eisenerz, wobei eine Koksofengasleitung aus der Kokerei mit der Anlage zur Direktreduktion von Eisenerz leitungsmäßig verbunden ist, sowie ein Verfahren zum Betrieb eines solchen integrierten Hüttenwerkes.

Bei der Herstellung von Stahl nach dem Sauerstoffblasverfahren in Sauerstoffaufblaskonvertern, in bodenblasenden Konvertern oder in Konvertern, bei denen diese Blasarten kombiniert angewendet werden können, unter teilweisem Einsatz von eisenhaltigen Feststoffen, wird flüssiges Roheisen benötigt. Dieses wird in der Hochofenanlage mittels hochwertigem Hüttenkoks, welch letzterer aus der Kokerei geliefert wird, hergestellt. In Abhängigkeit von der Analyse und der fühlbaren Wärme des flüssigen Roheisens werden den Konvertern als Kühlmittel feste Eisenträger, insbesondere Schrott, zugesetzt, wobei die Zugabe von zugekauftem (sogenanntem Fremd-) Schrott mitunter den Nachteil mit sich bringt, daß unerwünschte, nicht entfernbare Begleitelemente in den erzeugten Stahl eingebracht werden.

Beim Betrieb von Hüttenwerken dieser Art entstehen große Mengen teilweise hochwertiger sogenannter Kuppelgase, wie Koksofengas und die Konverterabgase, welche Kuppelgase bisher nur teilweise genützt wurden, z.B. für Heizzwecke, zur Erzeugung von Wasserdampf oder – mit nur geringem Wirkungsgrad – zur Erzeugung von Strom.

Eine Erhöhung der Menge des erzeugten Stahles ohne Kapazitätserweiterung der Hochofenanlage und ohne durch Schrott verursachte Probleme ist bei einer Anlage der eingangs beschriebenen Art, die aus Stahl und Eisen 95 (1975) Nr. 3, Seiten 91 bis 99 bekannt ist, gegeben.

Die Erfindung bezweckt eine Weiterentwicklung einer Anlage dieser Art dahingehend, daß der spezifische Energieverbrauch pro Tonne erzeugten Rohstahles, das ist die pro Tonne Rohstahl benötigte Menge an Primärenergie, reduziert ist. Insbesondere sollen die anfallenden Kuppelgase, nämlich das Koksofengas und die Konverterabgase, mit besserem Wirkungsgrad nutzbar gemacht werden.

Diese Aufgabe wird erfindungsgemäß dadurch gelöst, daß Leitungen für das Abgas aus den Konvertern und die Koksofengasleitung an einen Reformer zur Erzeugung von hauptsächlich CO und $H_2$ enthaltendem Reduktionsgas angeschlossen sind und der Reformer über eine Reduktionsgasleitung mit der Direktreduktionsanlage verbunden ist.

Die Direktreduktionsanlage kann insbesondere einen oder mehrere Schachtöfen umfassen. Es können jedoch auch andere bekannte Reduktionsaggregate, wie Wirbelschicht- und Wirbelbettreaktoren, verwendet werden.

Das im Koksofenabgas enthaltene Methan wird im Reformer mit dem im Konverterabgas enthaltenen $CO_2$ und Wasserdampf nach den Gleichungen

$$CH_4 + H_2O \rightleftharpoons CO + 3H_2$$
$$CH_4 + CO_2 \rightleftharpoons 2CO + 2H_2$$
$$CO_2 + H_2 \rightleftharpoons CO + H_2O$$

umgesetzt.

In den Abgasleitungen von den Konvertern zum Reformer ist vorteilhaft ein Gasspeicherbehälter angeordnet.

Das aus den Konvertern beim Blasen diskontinuierlich anfallende Abgas wird in dem Gasspeicher- oder Pufferbehälter gesammelt und kann kontinuierlich an den Reformer abgegeben werden.

Mehrere Konverter können auch in zeitlich zueinander versetzten Blaszyklen betrieben werden, um ohne Unterbrechung Konverterabgas für den Reformer verfügbar zu haben.

Ein Verfahren zum Betrieb eines integrierten Hüttenwerkes mit einer Kokerei, einer Hochofenanlage, einem Konverterstahlwerk und einer Anlage zur Direktreduktion von Eisenerz, wobei Koksofengas aus der Kokerei der Anlage zur Direktreduktion von Eisenerz zugeführt wird, ist dadurch gekennzeichnet, daß das Abgas aus den Konvertern und Koksofengas in einem Reformer zu hauptsächlich CO und $H_2$ enthaltendem Reduktionsgas umgewandelt und der Direktreduktionsanlage zugeleitet wird und daß der in der Direktreduktionsanlage erzeugte Eisenschwamm in heißem Zustand in die Konverter eingesetzt wird.

Auf diese Weise wird dem flüssigen Roheisen in den Konvertern zum Schmelzen des Eisenschwammes nur eine vergleichsweise geringe Wärmemenge entzogen. Der heiße Eisenschwamm ersetzt einen Teil des Roheisens und/oder des Schrottes.

Vorzugsweise werden auch feste Kohlenstoffträger in die in den Konvertern vorliegende Metallschmelze eingebracht, um noch enthaltene Eisenoxidreste zu reduzieren und den gewünschten Gehalt an Kohlenstoff einzustellen.

Nach einer weiteren Ausführungsform des erfindungsgemäßen Verfahrens werden das vom Kopf der Direktreduktionsanlage abgezogene, teilweise umgesetzte Reduktionsgas und gegebenenfalls ein Teil des Abgases aus den Konvertern weitgehend vom enthaltenen Kohlendioxid befreit und das auf diese Weise erhaltene, entsäuerte Gasgemisch wird dem Reduktionsgas als Kreislaufgas zugemischt. Durch diese Maßnahmen kann die Menge an erzeugtem Eisenschwamm erhöht werden, ohne gleichzeitig mehr Koksofengas zu benötigen. Da mehr Eisenschwamm anfällt, ist es folglich möglich, die Menge an zuzusetzendem Schrott noch weiter zu verringern.

Ein erfindungsgemäßes Hüttenwerk ist in der Zeichnung als Blockschema veranschaulicht.

Das Hüttenwerk umfaßt die im Blockschema mit 1 bezeichnete Kokerei; von dieser wird über die Leitung 2 Koksofengas abgezogen und der feste Koks gelangt über den Förderer 3 in die Hochofenanlage 4, von der lediglich ein Hochofen schematisch dargestellt ist. Letzerer wird aus der Erzaufgabe 5 auch mit - gegebenenfalls gesintertem - Stückerz beschickt. Hochofengas wird durch Leitung 4′ abgeführt. Das im Hochofen erzeugte Roheisen wird in das Konverterstahlwerk 6, das mehrere Konverter umfassen kann, übergeführt und in Rohstahl umgewandelt. Über Förderleitung 6′ kann auch Schrott zuchargiert werden. Das während des Umwandlungs-(Blas-)Prozesses entstehende Konverterabgas wird über die Leitung 7 abgezogen, der erzeugte Rohstahl wird aus den Konvertern abgestochen. In der Konverterabgasleitung 7 sind eine Gaskühl- und Reinigungseinrichtung 8 sowie ein Verdichter 9 vorgesehen. Weiters ist es zweckmäßig, in der Abgasleitung 7 einen Gasspeicher 10 anzuordnen.

Erfindungsgemäß ist mit den bechriebenen Anlageteilen eine Anlage 11 zur Direktreduktion von Eisenerz kombiniert, die - wie dargestellt - vorteilhaft als wenigstens en Schachtofen ausgebildet ist. Diese Direktreduktionsanlage 11 wird über die Leitung 12 von der Erzaufgabe 5 mit Stückerz oder Pellets beschickt. Die Konverterabgasleitung 7 wird bei 13 mit der Koksofengasleitung 2, in welcher eine Einrichtung 14 zur Koksgasreinigung und -kühlung sowie ein Verdichter 15 vorgesehen sind, vereinigt und das Mischgas wird in einen Reformer 16 geleitet. Im Reformer wird aus diesem Mischgas ein hauptsächlich aus CO und $H_2$ bestehendes Reduktionsgas erzeugt, welches über die Reduktionsgasleitung 17 in die Direktreduktionsalage 11 eingeleitet wird. Der entstandene Eisenschwamm wird aus der Direktreduktionsanlage 11 abgezogen und - gegebenenfalls in heiß brikettiertem Zustand aus einer der Reduktionsanlage nachgeschalteten, nicht dargestellten Brikettiereinrichtung - mittels einer Transportvorrichtung 18 in die Konverter des Konverterstahlwerkes 6 eingesetzt. Das teilweise umgesetzte Reduktionsgas, das Abgas aus der Direktreduktionsanlage oder "top-gas" vom Kopf der Direktreduktionsanlage 11 wird durch die Topgasleitung 19 abgeführt, in welche im gezeigten Ausführungsbeispiel ein Gaskühl- und -reinigungsaggregat 20 sowie ein Verdichter 21 eingebaut sind. Ein Teil des Topgases kann nach Verdichtung im Verdichter 21 über die strichliert eingezeichnete Leitung 22 in die Konverterabgas führende Leitung 7 eingespeist und dem Reformer 16 zugeführt werden. Die bei 23 abzweigende Leitung 24 bringt gereinigtes Topgas zum Reformer 16, wo es zweckmäßig zur Beheizung der Katalysatorrohre des Reformers verbrannt wird. Der Wärmeinhalt der durch Leitung 25 aus dem Reformer abgeführten Verbrennungsgase wird gemäß der gezeigten Ausführungsform in den Rekuperatoren 26 und 27 noch zur Vorwärmung der Koksofengase in Leitung 2 sowie der Konverterabgase in Leitung 7 ausgenützt.

Nach einer gleichfalls strichliert dargestellten Variante kann die Konverterabgasleitung 7 über eine Zumischleitung 28 mit der Topgasleitung 19 verbunden sein, wobei in einem Mischkopf 29 die Mengenanteile der durch die vom Mischkopf 29 wegführende Kreislaufgasleitung 30 und durch die Reduktionsgasleitung 17 der Direktreduktionsanlage 11 zugeführten Gase geregelt werden können. In die Kreislaufgasleitung 30 ist eine Einrichtung 31 zur Abtrennung von $CO_2$ (Entsäuerung) aus dem gereinigten und verdichteten, gegebenenfalls mit Konverterabgas vermischten Topgas sowie zur Vorwärmung des entsäuerten Gasgemisches eingebaut. Zum Zweck der Beheizung kann gereinigtes Topgas aus Leitung 24 durch Zweigleitung 32 der Einrichtung 31 zugeführt werden.

In den einzelnen Leitungen können des weiteren nicht dargestellte Absperr-, Umlenk- und Regelorgane vorgesehen sein.

Aus der folgenden Beschreibung sind weitere Einzelheiten hinsichtlich des Aufbaues und des Betriebes des erfindungsgemäßen integrierten Hüttenwerkes zu entnehmen.

Die zu einem solchen Hüttenwerk vereinigten Anlagen können, beispielsweise zur Erzeugung von $4{,}2.10^6$ jato Rohstahl, folgende Kapazitäten aufweisen:

| Kokerei | |
|---|---|
| Koksproduktion: | 1,2 Mio jato<br>inkl. 0,08 Mio jato Grus |
| Einsatzkohle: | 1,74 Mio jato (feucht) |
| Koksofengas, netto: | 540 Mio $m^3$/Jahr |

| Hochofenanlage | |
|---|---|
| 2 Hochöfen | je 4200 t/Tag |
| Erzeugung: | 2,65 Mio jato Roheisen |
| Kohleeinblasung: | 350000 jato |
| Hochofengas, netto: | 3,786 Mio $m^3$/Jahr |

| Konverterstahlwerk |
|---|
| 4x140 t-Konverter mit CO-Gas-Gewinnung, Ausbringung ca. 90% |

| Direktreduktionsanlage | |
|---|---|
| Schachtöfen als 2x750000 jato-Module Topgas, netto: | 2265 Mio $m^3$/Jahr |

Sämtliche Volumsangaben beziehen sich auf den Normalzustand der Gase.

"Netto" bedeutet Gesamterzeugung abzüglich Eigenverbrauch.

Typische Zusammensetzungen der im Hüttenwerk erzeugten Gase sind aus der folgenden Tabelle zu ersehen:

| Bestandteil | Konverter-Abgas [Vol.%] | Koksofen-gas [Vol.%] | Hochofen-gas [Vol.%] | Topgas nach Wäscher (20) [Vol.%] | Reduktionsgas [Vol.%] |
|---|---|---|---|---|---|
| CO | 70 | 6 | 24 | 50 | 60,9 |
| $H_2$ | 5 | 61,6 | 2 | 20 | 27,3 |
| $CO_2$ | 15 | 1,6 | 19 | 20 | 3,4 |
| $N_2$ | 10 | 2,0 | 55 | 0,75 | 0,6 |
| $H_2O$ | – | – | – | 9,3 | 5 |
| $CH_4$ | – | 26,1 | – | – | 0,02 |
| C | – | 0,1 | – | – | – |
| $O_2$ | – | – | – | – | – |
| S | – | – | – | – | – |
| $H_U$ [kWh/$m^3$] | 2,33 | 5,81 | 1,05 | 2,15 | |

Zur weiteren Erläuterung dient das folgende Ausführungsbeispiel, welches unter Verwendung eines integrierten Hüttenwerkes der vorstehend beschriebenen Betriebsart auf die Herstellung von 1 t Rohstahl (RS) berechnet ist.

Beispiel:

Mengen- und Energiebilanz jedes Anlagenteiles:

| Kokerei | |
|---|---|
| Einsatz in die Koksöfen: | |
| Kokskohle trocken | 375 kg/$t_{RS}$ |
| Abgabe: | |
| Koks und Koksgrus | 281 kg/$t_{RS}$ |
| Koksofengas netto | 128 $m^3$/$t_{RS}$ |
| Therm. Energie Koksofengas netto | 731 kWh/$t_{RS}$ |

| Hochofenanlage (einschließlich Sinteranlage): | |
|---|---|
| Einsatz: | |
| Erz in Form von Sinter | 906 kg/$t_{RS}$ |
| Kohle | 140 kg/$t_{RS}$ |
| Koks | 281 kg/$t_{RS}$ |
| Abgabe: | |
| Roheisen | 630 kg/$t_{RS}$ |
| Hochofengas netto | 645 $m^3/t_{RS}$ |
| Therm. Energie Hochofengas | 678 kWh/$t_{RS}$ |

Hochofengas wird zum Teil im Hüttenwerk selbst verfeuert (Vorwärmeöfen), zum Teil in einem Kraftwerk verstromt.

| Reformer | |
|---|---|
| Einsatz: | |
| Koksofengas | 128 $m^3/t_{RS}$ |
| Konverterabgas | 200 $m^3/t_{RS}$ |
| Topgas aus der Direktreduktionsanlage | 140 $m^3/t_{RS}$ |
| Abgabe: | |
| Reduktionsgas | 540 $m^3/t_{RS}$ |

| Direktreduktions-Schachtofen | |
|---|---|
| Einsatz: | |
| Reduktionsgas | 540 $m^3/t_{RS}$ |
| Erz in Form von Pellets | 265 kg/$t_{RS}$ |
| Erz in Form von Stückerz | 255 kg/$t_{RS}$ |
| Abgabe: | |
| Direktreduziertes Eisen (DRE, Eisenschwamm) | 360 kg/$t_{RS}$ |
| Topgas | 540 $m^3/t_{RS}$ |
| Therm. Energie Topgas | 465 kWh/$t_{RS}$ |

| Konverterstahlwerk | |
|---|---|
| Einsatz: | |
| Roheisen | 630 kg/$t_{RS}$ |
| DRE | 360 kg/$t_{RS}$ |
| Schrott und Zuschläge | 130 kg/$t_{RS}$ |
| Abgabe: | |
| Rohstahl | 1 t |
| Konverterabgas | 200 $m^3/t_{RS}$ |

Die Einsatzstoffe bzw. Produkte hatten folgende Zusammensetzung:

Die Einsatzstoffe bzw. Produkte hatten folgende Zusammensetzung:

| | | Stückerz | Sinter | Pellets | DRE | Roheisen | Rohstahl |
|---|---|---|---|---|---|---|---|
| Gesamt Fe | % | 65 | 67 | 67 | 92,1 | 94,4 | – |
| C | % | – | – | – | 1,5 | 4 | 0,25 |
| $Al_2O_3$ und $SiO_2$ | % | 4,6 | 1,5 | 2,5 | 3,4 | – | – |
| Si | % | – | – | – | – | 0,5 | – |
| Mn | % | 0,04 | 0,3 | – | – | 1,0 | – |
| P | % | 0,05 | 0,05 | 0,025 | 0,043 | 0,08 | 0,035 |
| S | % | 0,013 | 0,011 | 0,02 | 0,014 | 0,04 | 0,035 |

Selbstverständlich können erfindungsgemäß auch Einsatzstoffe mit von den angegebenen Analysenwerten abweichender Qualität verwendet werden.

Ein Vergleich der Energiebilanz für die Herstellung von 1 t Rohstahl in einem erfindungsgemäßen integrierten Hüttenwerk mit jener für ein herkömmliches Hüttenwerk, welches ohne Direktreduktionsanlage arbeitet, ergibt eine Verminderung des spezifischen (auf eine Tonne erzeugten Rohstahles bezogenen) Energieverbrauches von ca. 1,77 GJ (etwa 21,77 GJ/t Rohstahl konventionell gegenüber etwa 20,0 GJ/t Rohstahl gemäß obigem Beispiel).

**Patentansprüche**

1. Integriertes Hüttenwerk, umfassend eine Kokerei (1), eine Hochofenanlage (4), ein Konverterstahlwerk (6) und eine Anlage (11) zur Direktreduktion von Eisenerz, wobei eine Koksofengasleitung (2) aus der Kokerei (1) mit der Anlage (11) zur Direktreduktion von Eisenerz leitungsmäßig verbunden ist, dadurch gekennzeichnet, daß Leitungen (7) für das Abgas aus den Konvertern und die Koksofengasleitung (2) an einen Reformer (16) zur Erzeugung von hauptsächlich CO und $H_2$ enthaltendem Reduktionsgas angeschlossen sind und der Reformer (16) über eine Reduktionsgasleitung (17) mit der Direktreduktionsanlage (11) verbunden ist.

2. Hüttenwerk nach Anspruch 1, dadurch gekennzeichnet, daß in den Abgasleitungen (7) von den Konvertern zum Reformer (16) ein Gasspeicherbehälter (10) angeordnet ist.

3. Verfahren zum Betrieb eines integrierten Hüttenwerkes mit einer Kokerei (1), einer Hochofenanlage (4), einem Konverterstahlwerk (6) und einer Anlage (11) zur Direktreduktion von Eisenerz, wobei Koksofengas aus der Kokerei (1) der Anlage (11) zur Direktreduktion von Eisenerz zugeführt wird, dadurch gekennzeichnet, daß das Abgas aus den Konvertern und Koksofengas in einem Reformer (16) zu hauptsächlich CO und $H_2$ enthaltendem Reduktionsgas umgewandelt und der Direktreduktionsanlage (11) zugeleitet wird und daß der in der Direktreduktionsanlage (11) erzeugte Eisenschwamm in heißem Zustand in die Konverter eingesetzt wird.

4. Verfahren nach Anspruch 3, dadurch gekennzeichnet, daß feste Kohlenstoffträger in die in den Konvertern vorliegende Metallschmelze eingebracht werden.

5. Verfahren nach Anspruch 3 oder 4, dadurch gekennzeichnet, daß das vom Kopf der Direktreduktionsanlage (11) abgezogene, teilweise umgesetzte Reduktionsgas und gegebenenfalls ein Teil des Abgases aus den Konvertern weitgehend vom enthaltenen Kohlendioxid befreit werden und das auf diese Weise erhaltene, entsäuerte Gasgemisch dem Reduktionsgas als Kreislaufgas zugemischt wird.

**Claims**

1. Integrated mill arrangement comprising a coking plant (1), a blast furnace arrangement (4), a converter steelwork (6) and a plant (11) for directly reducing iron ore, a coke oven gas duct (2) from the coking plant (1) being connected in duct-like manner with the plant (11) for directly reducing iron ore, characterised in that ducts (7) for the exhaust gas from the converters and the coke oven gas duct (2) are connected to a reformer (16) for producing reducing gas mainly containing CO and $H_2$, and that the reformer (16) is connected with the direct reduction plant (11) via a reducing gas duct (17).

2. Mill arrangement according to claim 1, characterised in that a gas reservoir (10) is arranged in the exhaust gas ducts (7) from the converters to the reformer (16).

3. Process for operating an integrated mill comprising a coking plant (1), a blast furnace arrangement (4), a converter steelwork (6) and a plant (11) for directly reducing iron ore, wherein coke oven gas from the coking plant (1) is supplied to the plant (11) for directly reducing iron ore, characterised in that the ex-

duced in the direct reduction plant (11) is charged into the converters in hot condition.

4. Process according to claim 3, characterised in that solid carbon carriers are introduced into the metal melt present in the converters.

5. Process according to claim 3 or 4, characterised in that the partially reacted reducing gas extracted from top of the direct reduction plant (11) and optionally part of the exhaust gas from the converters are largely freed from carbon dioxide contained therein and that the thus obtained deacidified gas mixture is admixed to the reducing gas as a circulation gas.

**Revendications**

1. Usine sidérurgique intégrée, comprenant une cokerie (1), une installation de hauts fourneaux (4), une aciérie à convertisseurs (6) et une installation (11) pour la réduction directe du minerai de fer, une conduite de gaz de four à coke (2) provenant de la cokerie (1) étant reliée à l'installation (11) pour la réduction directe du minerai de fer, caractérisée en ce que les conduites (7) pour le gaz usé provenant des convertisseurs et la conduite de gaz de four à coke (2) sont reliées à une installation de reformage (16) pour la production d'un gaz de réduction contenant principalement CO et $H_2$ et en ce que l'installation de reformage (16) est reliée à l'installation de réduction directe (11) par l'intermédiaire d'une conduite de gaz de réduction (17).

2. Usine sidérurgique selon la revendication 1, caractérisée en ce qu'un réservoir de stockage de gaz (10) est disposé dans les conduites de gaz usé (7) allant des convertisseurs à l'installation de reformage (16).

3. Procédé d'exploitation d'une usine sidérurgique intégrée avec une cokerie (1), une installation de hauts fourneaux (4), une aciérie à convertisseurs (6) et une installation (11) pour la réduction directe du minerai de fer, le gaz de four à coke provenant de la cokerie (1) étant conduit à l'installation (11) de réduction directe du minerai de fer, caractérisé en ce que le gaz usé provenant des convertisseurs et le gaz de four à coke sont transformés dans une installation de reformage (16) en un gaz de réduction contenant principalement CO et $H_2$ et sont conduits à l'installation de réduction directe (11) et en ce que l'éponge de fer produite dans l'installation de réduction directe (11) est introduite dans les convertisseurs à l'état chaud.

4. Procédé selon la revendication 3, caractérisé en ce que des porteurs de carbone solides sont introduits dans la masse métallique fondue présente dans les convertisseurs.

5. Procédé selon la revendication 3 ou 4, caractérisé en ce que le gaz de réduction partiellement transformé et soutiré dans l'installation de réduction directe (11) et éventuellement une partie du gaz usé provenant des convertisseurs sont largement débarrassés du dioxyde de carbone contenu et en ce que le mélange gazeux désacidifié obtenu de cette façon est mélangé au gaz de réduction comme gaz de recyclage.

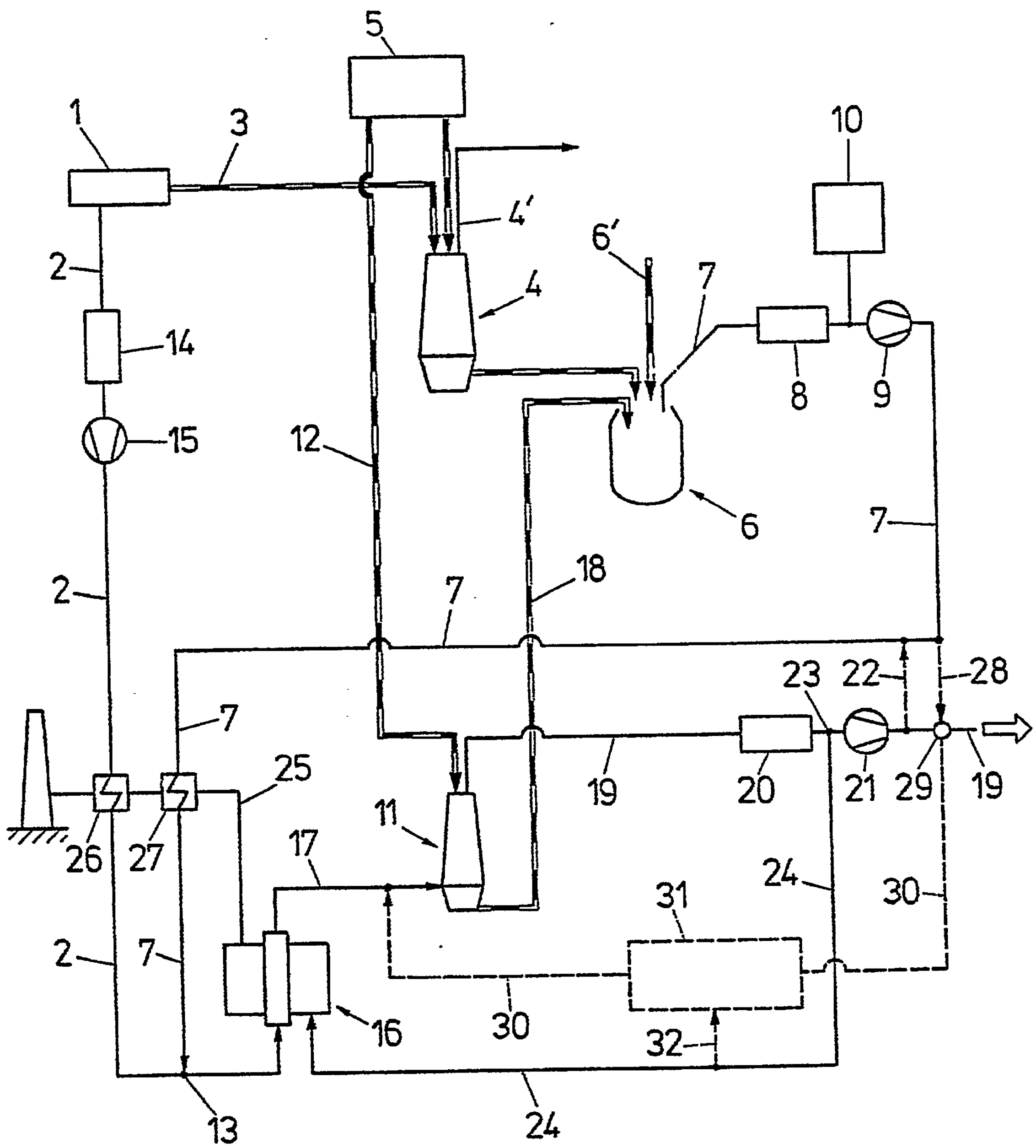
1
2
3
4
4'
5
6
6'
7
8
9
10
11
12
13
14
15
16
17
18
19
20
21
22
23
24
25
26
27
28
29
30
31
32